Europäisches Patentamt

European Patent Office

Office européen des brevets

(11) Numéro de publication: **0 224 405**
**A1**

(12) **DEMANDE DE BREVET EUROPEEN**

(21) Numéro de dépôt: **86402384.1**

(22) Date de dépôt: **03.10.86**

(51) Int. Cl.⁴: **B 63 B 5/24**
**B 32 B 27/12**

(30) Priorité: **07.10.85 FR 8514812**

(43) Date de publication de la demande:
**03.06.87 Bulletin 87/23**

(84) Etats contractants désignés:
**ES GR**

(71) Demandeur: **Desport, Lucien André**
**114, Avenue Mozart**
**F-75016 Paris(FR)**

(71) Demandeur: **ENGINEERING, MANAGEMENT, DATA**
**PROCESSING (E.M.D.P) Société dite :**
**159, rue de Rome**
**F-75017 Paris(FR)**

(72) Inventeur: **Desport, Lucien Andre**
**114, Avenue Mozart**
**F-75017 Paris(FR)**

(54) **Nappe stratifiée pouvant servir d'élément constitutif d'un moule.**

(57) Nappe stratifiée, comprenant une couche centrale (1) en polyuréthanne, deux couches intermédiraies (2, 3) en tissu de verre et deux couches de parement (4, 5) en polyuréthanne. Cette nappe est utilisée dans la construction navale.

FIG_1

FIG_2

EP 0 224 405 A1

Nappe stratifiée pouvant servir d'élément constitutif d'un moule.

A la demande de brevet français No. 84.13.506 qui n'est pas encore publiée et qui ne fait donc pas partie de l'état de la technique, on décrit un moule transformable qui comprend un treillis constitué de lattes notamment de bois et sur lequel est appliquée une nappe, notamment en polyuréthanne. L'ensemble du treillis et de la nappe forment un moule permettant de mouler des objets de grande dimension à surface non développable et tout particulièrement une coque de bateau.

La nappe doit avoir une rigidité bien déterminée, de manière à suivre la courbe définie par le treillis sans pour autant fléchir entre les lattes du treillis, en constituant des poches très préjudiciables à l'opération de moulage ultérieure.

A cet effet, on a prévu une nappe stratifiée comprenant, outre une couche de polyuréthanne, une couche en une matière donnant de la rigidité, notamment en un tissu de verre. A l'usage, on s'est heurté à des difficultés. Lors du moulage, la température s'élève. Or, le coefficient de dilatation thermique du verre et du polyuréthanne sont différents et cela porte atteinte à la forme de la nappe. De plus, ces coefficients de dilatation thermique sont différents à leur tour de celui de la matière constitutive du treillis, de sorte que la surface du moule devient inégale, ou que le moule se détériore.

L'invention pallie ces inconvénients par une nappe stratifiée qui a tout à la fois la rigidité requise et un coefficient de dilatation thermique sensiblement égal à celui du treillis.

La nappe stratifiée suivant l'invention, de symétrie par rapport à son plan médian, est caractérisée en ce qu'elle comprend une couche centrale en une première matière ayant un coefficient de dilatation thermique ($\alpha_u$) et un module d'Young ($E_u$) donnés, deux couches intermédiaires de part et d'autre de la couche centrale en une seconde matière ayant un coefficient de dilatation thermique ($\alpha_v$) et un module d'Young ($E_v$) donnés et deux couches de parement en la première matière, l'épaisseur des couches étant telle que l'équation suivante soit satisfaite :

$$\alpha_T = \frac{\alpha_v \cdot e_v \cdot E_v + \alpha_u \cdot e_u \cdot E_u}{e_v \cdot E_v + e_u \cdot E_u}$$

$\alpha_T$ étant un coefficient de dilatation thermique intermédiaire entre $\alpha_v$ et $\alpha_u$, $e_u$ étant la somme des épaisseurs des couches en la première matière et $e_v$ celle des couches en la seconde matière, et la distance des couches en la seconde matière par rapport à la fibre neutre étant telle que la nappe ait une rigidité donnée.

On a constaté, en effet, que pour autant que la nappe est de symétrie par rapport à son plan médian, le coefficient de dilatation thermique de la nappe composite est sensiblement égal à celui donné par l'équation ci-dessus, bien que les matières constitutives de la nappe ne soient pas réparties de manière homogène. En se rendant maître d'abord de la dilatation de la nappe, en jouant sur les quantités respectives de première et de seconde matières et en tenant compte de l'effet de rigidité s'opposant à la déformation sous l'effet de la chaleur, il est aisé ensuite, en jouant cette fois sur la position des deux couches intermédiaires, de se rendre maître de la rigidité de la nappe. Cette rigidité correspondant à une contrainte de flexion telle que définie par l'essai de flexion suivant la norme NF T 51-001 d'octobre 1958, est comprise entre 60 daN.mm$^2$/mm et 5000 DaN.mm$^2$/mm.

En général, l'épaisseur de la couche centrale est comprise entre 1 et 5 mm et celle des couches de parement est également comprise entre 1 et 5 mm, tandis que l'épaisseur des couches intermédiaires est comprise entre 0,5 et 0,1 mm, ces couches intermédiaires pouvant être constituées d'un tissu de verre donnant éventuellement une rigidité orientée, en fonction de la nature du tissage.

Au dessin annexé :

la figure 1 est une vue en coupe d'une nappe suivant l'invention, et

la figure 2 est une vue partielle avec arrachement d'une partie d'un moule suivant l'invention.

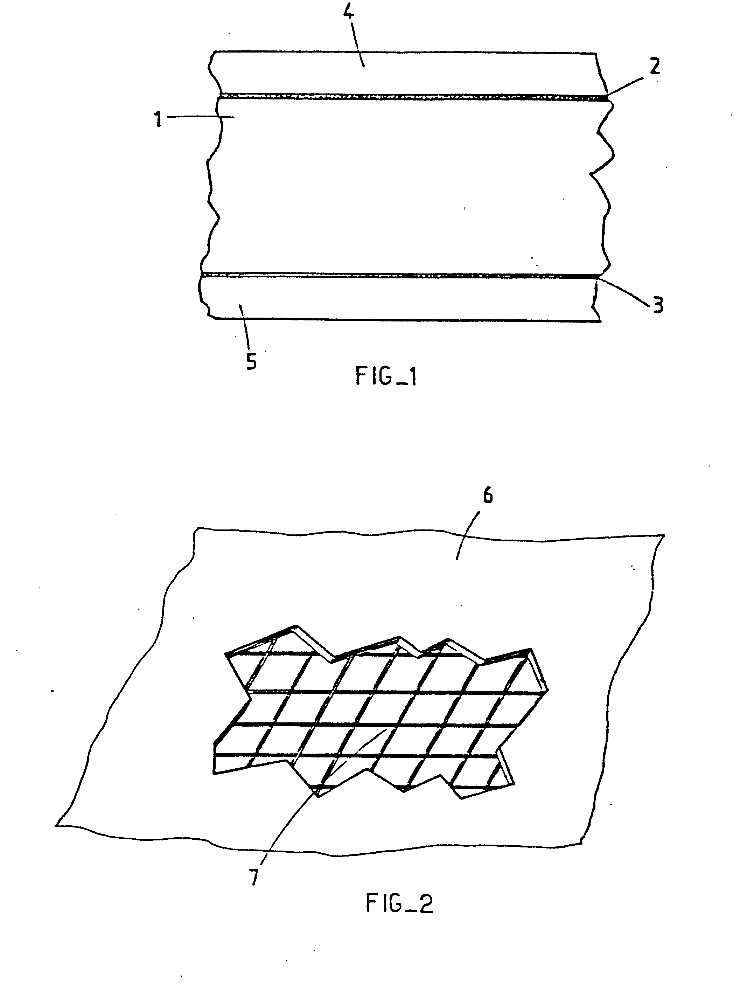

La nappe suivant l'invention, représentée à la figure 1, comprend une couche centrale 1 en polyuréthanne, de 4 mm d'épaisseur, deux couches intermédiaires 2 et 3 en tissu de verre d'un dixième de mm d'épaisseur et deux couches de parement 4 et 5 en polyuréthanne de 1 mm d'épaisseur. Le coefficient de dilatation thermique de la résine est de 80.10$^{-6}$/°C, celui du verre est de 5.10$^{-6}$/°C. Leur modules d'Young sont de 3 daN/mm$^2$ et de 7700 daN/mm$^2$. Il en résulte que $\alpha_T$, qui est le coefficient de dilatation thermique global de la nappe, est de 9,8.10$^{-6}$/°C. La rigidité de la nappe, telle que définie à la norme précitée, est de 1150 daN.mm$^2$/mm.

Suivant la figure 2, on applique la nappe désignée dans son ensemble par la référence 6 sur un treillis constitué de lattes de bois 7 à mailles rectangulaires dont le petit côté est égal à 20 cm et dont le long côté est égal à 30 cm.

En utilisant l'ensemble du treillis 7 et de la nappe 6 comme parois intérieures d'un moule pour fabriquer des coques de bateau;: on obtient des résultats de moulage qui sont excellents, sans détérioration du moule au cours de l'opération.

Bien entendu, on pourrait également prévoir que la matière constitutive des deux couches de parement soit différente de celle de la couche centrale, auquel cas l'équation précédente devrait être modifiée pour tenir compte de la présence de trois matières ayant des coefficients de dilatation thermique et des modules d'Young différents.

REVENDICATIONS

1. Nappe stratifiée, de symétrie par rapport à son plan médian, caractérisée en ce qu'elle comprend une couche centrale en une première matière ayant un coefficient de dilatation thermique ($\alpha_u$) et un module d'Young ($E_u$) donnés, deux couches intermédiaires de part et d'autre de la couche centrale en une seconde matière ayant un coefficient de dilatation thermique ($\alpha_v$) et un module d'Young ($E_v$) donnés et deux couches de parement en la première matière, l'épaisseur des couches étant telle que l'équation suivante soit satisfaite :

$$\alpha_T = \frac{\alpha_v \cdot e_v \cdot E_v + \alpha_u \cdot e_u \cdot E_u}{e_v \cdot E_v + e_u \cdot E_u}$$

$\alpha_T$ étant un coefficient de dilatation thermique intermédiaire entre $\alpha_v$ et $\alpha_u$, $e_u$ étant la somme des épaisseurs des couches en la première matière et $e_v$ celle des couches en la seconde matière, et la distance des couches en la seconde matière par rapport à la fibre neutre étant telle que la nappe ait une ridigité donnée.

2. Nappe suivant la revendication 1, caractérisée en ce qu'elle a une rigidité, correspondant à une contrainte de flexion telle que définie par l'essai de flexion suivant la norme NF T 51-001 d'octobre 1956, comprise entre 60 daN.mm$^2$/mm et 5000 daN.mm$^2$/mm.

3. Nappe suivant la revendication 1 ou 2, caractérisée en ce que la première matière est du polyuréthanne.

4. Nappe suivant l'une des revendications précédentes, caractérisée en ce que la seconde matière est un tissu de fibres de verre.

5. Nappe suivant l'une des revendications précédentes, caractérisée en ce que l'épaisseur de la couche centrale est comprise entre 1 et 5 mm et l'épaisseur des couches de parement est comprise entre 1 et 5 mm.

6. Nappe suivant l'une des revendications précédentes, caractérisée en ce que l'épaisseur des couches intermédiaires est comprise entre 0,5 et 0,1 mm.

7. Nappe suivant la revendication 1, caractérisée en ce que la matière des couches de parement est différente de celle de la couche centrale.

8. Moule comprenant une nappe appliquée sur un treillis à surface gauche, caractérisé en ce que la nappe est telle que définie aux revendications précédentes, et $\alpha_T$ est le coefficient de dilatation thermique du treillis.

(six pages)

Engineering, Management, Data Processing
(E.M.D.P.)

Le Mandataire :

0224405

FIG_1

FIG_2

Office européen
des brevets

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int. Cl.4) |
|---|---|---|---|
| A | WO-A-8 300 840  (MADER)<br>* En entier * | 1,4,7 | B 63 B    5/24<br>B 32 B   27/12 |
| | --- | | |
| A | FR-A-2 206 292  (DAIKI SANGYO CO. LTD.)<br>* Pages 2,3; figure 3 * | 1,3,4 | |
| | --- | | |
| A | FR-A-1 581 888  (JOHNS-MANVILLE CORP.) | | |
| | --- | | |
| A | US-A-3 920 871  (JOHNSON) | | |
| | ----- | | |

DOMAINES TECHNIQUES
RECHERCHES (Int. Cl.4)

B 63 B
B 32 B

Le présent rapport de recherche a été établi pour toutes les revendications

| Lieu de la recherche | Date d'achevement de la recherche | Examinateur |
|---|---|---|
| LA HAYE | 19-02-1987 | VOLLERING J.P.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou apres cette date
D : cité dans la demande
L : cité pour d'autres raisons

& : membre de la même famille, document correspondant

OEB Form 1503 03 82